# EUROPÄISCHE PATENTSCHRIFT

(11) **EP 1 660 801 B1**
(45) Veröffentlichungstag und Bekanntmachung des Hinweises auf die Patenterteilung: **20.12.2006**
(21) Anmeldenummer: 04764405.9
(22) Anmeldetag: 24.08.2004
(51) Int. Cl.: F16K 31/53, F16K 1/22, F16K 31/04, F02D 11/10

(54) **KLAPPENSTELLVORRICHTUNG**
THROTTLE VALVE ADJUSTING DEVICE
DISPOSITIF DE POSITIONNEMENT DE CLAPET

(30) Priorität: 05.09.2003 DE 10341396
(43) Veröffentlichungstag der Anmeldung: 31.05.2006
(73) Patentinhaber: Pierburg GmbH, 41460 Neuss (DE)
(72) Erfinder: NEISE, Ralf, 13086 Berlin (DE); MÜNICH, Marc-Anton, 14476 Gross Glienicke (DE)
(74) Vertreter: Ter Smitten, Hans
(86) Internationale Anmeldenummer: PCT/EP2004/009425
(87) Internationale Veröffentlichungsnummer: WO 2005/028936

(56) Entgegenhaltungen:
- DE-A- 10 048 937
- DE-A- 19 825 727
- US-A- 4 969 437
- US-A- 5 141 070
- US-B2- 6 581 569

## Beschreibung

Die Erfindung betrifft eine Klappenstellvorrichtung, insbesondere eine Drosselklappenstellvorrichtung für Verbrennungskraftmaschinen, mit einem Klappenstutzen, welcher eine Klappe, die mit einer Klappenwelle verbunden ist, aufweist, über die die Klappe drehbar zumindest einseitig im Klappenstutzen gelagert ist, und mit einer Antriebseinheit, welche zumindest einen Elektromotor und ein Untersetzungsgetriebe zum Antrieb der Klappe und einen Sensor zur Lagerückmeldung der Klappenstellung aufweist, wobei zumindest das Getriebe in einem Gehäuse angeordnet ist, welches eine Kontaktplatte, die an dem Klappenstutzen befestigt ist und einen das Gehäuse verschließenden Deckel aufweist.

Solche gattungsgemäße Klappenstellvorrichtungen sind bekannt und werden in einer Vielzahl von Anmeldungen beschrieben. Dabei ist es üblich entweder den Drosselklappenstutzen einteilig mit dem Gehäuse für das Getriebe und den Elektromotor auszuführen, um dann das Getriebe durch einen Getriebedeckel zu verschließen oder die gesamte Antriebseinheit am Drosselklappenstutzen anzuflanschen, wobei das Gehäuse die gesamte Antriebseinheit umgibt.

Eine derartige Klappenstellvorrichtung wird beispielsweise in der DE 100 48 937 A1 beschrieben. Während die Drosselklappe über ihre Drosselklappenwelle vollständig im Drosselklappenstutzen gelagert ist, ist die gesamte Antriebseinheit mit Elektromotor und Getriebe in einem Gehäuse angeordnet, welches nachträglich am Drosselklappenstutzen befestigt wird. Am Gehäuse der Antriebseinheit ist des weiteren ein elektrischer Anschlußstecker integriert.

Durch die DE 198 25 727 A1 wird ein Drosselklappenstutzen offenbart, bei dem ein Gehäuse des Drosselklappenstutzens sowohl die Drosselklappe als auch die Antriebseinheit aufnimmt, wobei das Gehäuse einen Arbeitsraum aufweist, in dem ein Elemententräger angeordnet wird, über welchen die Übertragungselemente gelagert werden. Dieser Elemententräger wird am Drosselklappenstutzengehäuse befestigt. Das Gehäuse des Elektromotors ist dabei ebenso wie eine die Lagerung der Drosselklappen tragende Hülse als auch eine Getriebemittelradachse fest mit dem Elemententräger verbunden. Die Lagerstellen sowohl der Abtriebswelle des Motors als auch, wie bereits erwähnt, der Drosselklappe sind somit im Elemententräger angeordnet.

Während eine Nachbearbeitung des Drosselklappenstutzens entfällt, wird die Montage einer solchen Vorrichtung deutlich komplizierter. Insbesondere die Anbindungen des Motors, der Getriebemittelradachse und der Lagerung für die Drosselklappenwelle an den Elemententräger erfordern einen hohen Montageaufwand. Des weiteren besteht hier keine Unabhängigkeit zwischen Drosselklappenstutzen und Antriebseinheit, so daß diese nicht modular auch für andere Drosselklappenstutzen verwendet werden kann.

In der Ausführung der vorgeschriebenen Schrift 100 48 937 besteht der Nachteil, daß der benötigte Bauraum weiterhin relativ groß ist und der Motor komplett vormontiert in das Gehäuse eingebracht werden muß, um dort zusätzlich fixiert beziehungsweise gelagert zu werden.

Aufgabe der Erfindung ist es daher, eine Klappenstellvorrichtung zur Verfügung zu stellen, die modular aufgebaut ist, Kosten bei der Herstellung und der Montage insbesondere durch Bauteilreduzierung verringert und an gegebene Platzverhältnisse angepasst werden kann. Eventuell auszutauschende oder modifizierbare Einzelteile der Klappenstellvorrichtung sollen auf einfache Weise zugänglich sein. Des weiteren wird eine Gewichtsreduzierung angestrebt.

Diese Aufgaben werden dadurch gelöst, daß der Elektromotor außerhalb des Gehäuses und des Klappenstutzens angeordnet ist, wobei der Elektromotor einseitig offen ausgeführt ist und über ein Polrohr, dessen erstes, an einer Antriebswelle des Elektromotors gelegenes Ende, auf einen ringförmigen axial verlaufenden Absatz der Kontaktplatte gesteckt ist, wodurch sein offenes Ende verschließbar ist und dessen zweites geschlossenes Ende in einem Lagerbock des Klappenstutzens angeordnet ist, wobei die Antriebswelle des Elektromotors auf der einen Seite in der Kontaktplatte und auf der anderen Seite in einer Lagerstelle am geschlossenen Ende des Polrohres gelagert ist, und wobei das Polrohr gleichzeitig als Gehäuse des Elektromotors dient.

Durch eine solche Ausführung wird der Werkstoffeinsatz minimiert, da Gehäuseteile entfallen. Die übrigen Teile können mit schieberlosen Formen hergestellt werden, so daß ein weitgehender Verzicht auf Einlegeteile bei der Herstellung möglich wird. Entsprechend werden Kosten sowie das Gewicht und die Abmessungen der Klappenstellvorrichtung reduziert. Es besteht eine gute Zugänglichkeit und somit Austauschbarkeit der Einzelteile.

In einer vorteilhaften Ausgestaltung ist der im wesentlichen ringförmige axial verlaufende Absatz der Kontaktplatte segmentförmig ausgebildet, so dass eine Vorfixierung des Polrohres an der Kontaktplatte und somit eine Lagefestlegung zwischen Elektromotor und Kontaktplatte unter vermindertem Werkstoffbedarf erfolgt.

In einer bevorzugten Ausführungsform erfolgt die Befestigung der Magnete im Polrohr durch ein axial angeordnetes Federelement, welches die Magnete in tangentialer Richtung gegen zumindest einen Vorsprung an der inneren Wand des Polrohres drückt, und das Polrohr weist zumindest an der zum Klappenstutzen gewandten Seite eine in axialer Richtung verlaufende Abflachung auf. Diese Abflachung korrespondiert mit dem inneren Vorsprung, wobei die Folge einer solchen Ausführung ist, daß ein größerer Freiraum des Bauraums erreicht wird.

In einer bevorzugten Ausführungsform sind mit einem Kollektor in Verbindung stehende Bürstenfedern des Elektromotors zur Kontaktierung kraft- oder formschlüssig an der Kontaktplatte der Stellvorrichtung befestigt, wodurch der Zusammenbau des Motors und der Anbau des Motors an die Kontaktplatte vereinfacht werden und zusätzliche Montageschritte eingespart werden können, wobei gleichzeitig eine sichere Art der Kontaktierung zwischen einem Permanent-Gleichstrommotor und einer Stromquelle hergestellt wird.

In einer weiterführenden Ausführung weist die Kontaktplatte einen Anschlußflansch zur Befestigung eines Steckers zur elektrischen Kontaktierung auf, wobei die Anschlußpins des jeweiligen Steckers eingespritzt oder gerastet sind. Durch diese Ausführungsform kann der jeweils zu verwendende elektrische Anschluß in Form des Steckers an kundenspezifische Voraussetzungen einfach angepasst werden, wobei gleichzeitig ein dichter Verschluß gewährleistet wird.

Eine Vereinfachung der Montage durch Festlegen der relativen Lage des Getriebegehäuses und des Drosselklappenstutzens zueinander wird dadurch erreicht, daß das Getriebe ein Antriebszahnrad, welches zumindest drehfest auf der Antriebswelle des Elektromotors angeordnet ist, ein Getriebemittelrad in Form eines Doppelzahnrades, welches auf einer Getriebemittelradachse gelagert ist und ein Antriebszahnrad aufweist, welches zumindest drehfest auf der Klappenwelle angeordnet ist, wobei die Getriebemittelradachse am Klappenstutzen befestigt ist und durch eine Bohrung in der Grundplatte in das Gehäuse des Getriebes reicht.

In einer bevorzugten Ausführungsform ist der Klappenstutzen aus Leichtmetall, wie beispielsweise Aluminiumdruckguß oder Magnesiumdruckguß oder Kunststoff hergestellt. Auf diese Weise wird eine hohe Stabilität auch Wärmefestigkeit mit einem geringen Gewicht optimal kombiniert.

Zur weiteren Verringerung der Gesamtmasse der Klappenstellvorrichtung ist die Kontaktplatte aus einem nicht leitenden Kunststoff hergestellt.

In einer bevorzugten Ausführung ist der Sensor als Potentiometer ausgeführt, der im Gehäuse angeordnet ist und dessen Leiterbahnen direkt auf die Kontaktplatte oder eine Platine gedruckt sind, wodurch eine einfache Programmierung mit geringem benötigten Speicheraum in der Steuerung der Lagerückmeldung durch die vorhandene Linearität des Potentiometers gegeben sind.

In einer weiterführenden Ausführungsform sind die elektrischen Leiterbahnen im Gehäuse angeordnet und auf die Kontaktplatte gedruckt oder aufgespritzt oder eingespritzt. Hierdurch werden zusätzliche Platinen vermieden und somit die Montage vereinfacht, wobei gleichzeitig eine zuverlässige elektrische Anbindung geschaffen wird.

In einer alternativen Ausführungsform sind die elektrischen Leiterbahnen als Stanzteile ausgeführt, die im Gehäuse des Getriebes freiliegend angeordnet sind, wodurch eine hohe Flexibilität bezüglich der jeweiligen Anschlüsse erreicht wird. Die Ausführung als Stanzteile birgt den Vorteil, daß eine hohe Stabilität der einzelnen Leiterbahnen erreicht wird, wobei gleichzeitig eine gute Austauschbarkeit, bei eventuellen Defekten gegeben ist. Die Anpassung an entsprechende kundenspezifische Stecker ist mit sehr geringem Aufwand durchführbar.

Vorzugsweise ist der Elektromotor über Schrauben oder am geschlossenen Ende des Polrohres ausgebildete Vorsprünge, welche in entsprechende Ausnehmungen des Lagerbocks greifen, drehfest am Lagerbock befestigt, wodurch die Lage des Polrohres und somit des Elektromotors zur Kontaktplatte und somit zu den Bürsten und zum Drosselklappenstutzen auf einfache Art und Weise festgelegt wird.

In einer alternativen Ausführungsform ist die Drehfestigkeit des Polrohres über den axial verlaufenden Absatz der Kontaktplatte hergestellt, indem die Abflachung des Polrohres in eine korrespondierende Abflachung des ansonsten ringförmigen Absatzes greift. Auch auf diese Weise wird ohne zusätzliche Montageschritte die Lage des Polrohres zur Kontaktplatte, den Bürsten und dem Drosselklappenstutzen festgelegt.

In einer wiederum alternativen Ausführung wird die Drehfestigkeit des Polrohres durch eine Schraubverbindung zwischen dem Polrohr und der Kontaktplatte hergestellt. Somit ist die Formgebung des Polrohres oder der Kontaktplatte vereinfacht und die einzuhaltenden Toleranzen können größer gewählt werden.

Es wird somit eine Klappenstellvorrichtung zur Verfügung gestellt, bei der der Werkstoffeinsatz minimiert ist und sowohl Herstellung als auch Montage der Klappenstellvorrichtung deutlich vereinfacht sind. Entsprechend können Herstellungskosten, aber auch das Gewicht und die Abmessungen der Stellvorrichtung reduziert werden, wobei gleichzeitig eine hohe Variabilität durch den modularen Aufbau geschaffen wird, so dass baugleiche Antriebseinheiten für verschiedene Klappenstutzen verwendet werden können.

Ein erfindungsgemäßes Ausführungsbeispiel einer Klappenstellvorrichtung ist in den Zeichnungen dargestellt und wird nachfolgend beschrieben.

Figur 1 zeigt in perspektivischer Ansicht eine zum Teil gesprengte Darstellung einer erfindungsgemäßen Stellvorrichtung zum Anschluß an einen Drosselklappenstutzen.

Figur 2 zeigt die erfindungsgemäße Klappenstellvorrichtung in perspektivischer Darstellung ohne Deckel.

Figur 3 zeigt die erfindungsgemäße Stellvorrichtung in perspektivischer Ansicht, wobei ein Gehäuse und ein Polrohr teilweise aufgeschnitten dargestellt sind.

Figur 4 zeigt die erfindungsgemäße Stellvorrichtung ohne Drosselklappenstutzen und Polrohr in perspektivischer Darstellung.

Das in den Figuren dargestellte Ausführungsbeispiel einer erfindungsgemäßen Klappenstellvorrichtung 1 besteht aus einem Klappenstutzen 2, in dem eine Klappe 3 auf einer Welle 4 über Schrauben 5 befestigt ist. Die Klappenwelle 4 kann dabei über eine Antriebseinheit 6 in Drehung versetzt werden, so daß der Klappenkörper 3 einen unterschiedlich großen Kanalquerschnitt im Stutzen 2 frei gibt.

Die Antriebseinheit 6 besteht aus einem Elektromotor 7, welcher über ein Untersetzungsgetriebe 8 mit der Klappenwelle 4 in Wirkverbindung steht. Das Untersetzungsgetriebe 8 ist in einem Gehäuse 9 angeordnet, welches im wesentlichen aus einer Kontaktplatte 10 und einem die Kontaktplatte im wesentlichen dicht verschließenden Deckel 11 besteht.

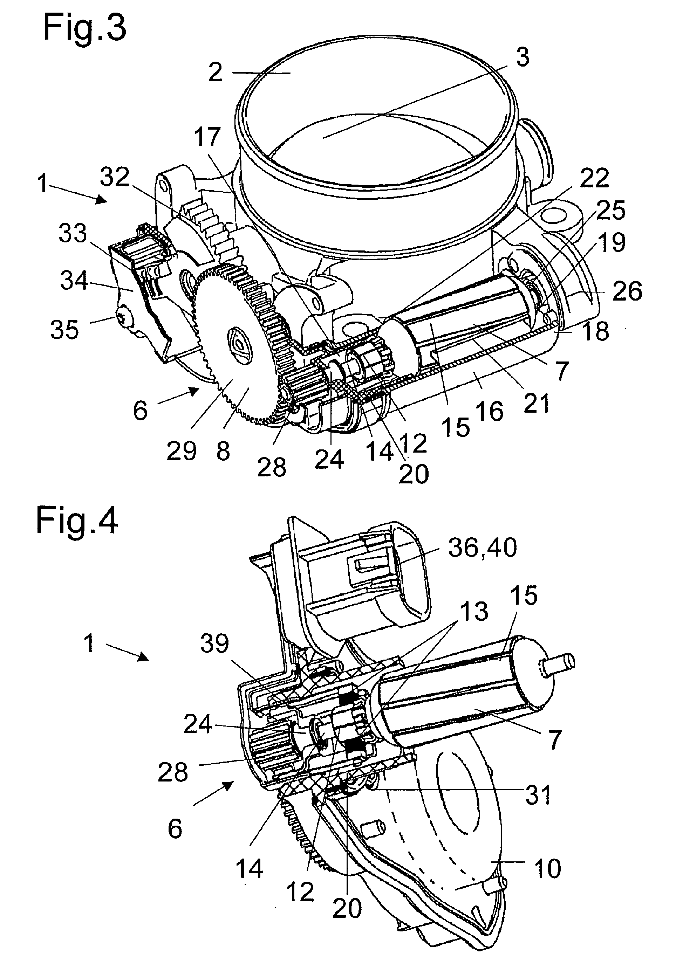

Der Elektromotor 7 ist im Ausführungsbeispiel als Permanentmagnetgleichstrommotor ausgeführt und weist entsprechend einen Kollektor 12 auf, welcher mit Bürstenfedern 13 in Wirkverbindung steht, über welche die elektrische Kontaktierung in bekannter Weise erfolgt. Der Aufbau des Elektromotors 7 ist insbesondere den Figuren 3 und 4 zu entnehmen. Auf einer Antriebswelle 14 des Elektromotors ist der Kollektor 12 sowie ein Rotor 15 angeordnet. Der Rotor 15 mit der Antriebswelle 14 und dem Kollektor 12 ist in einem Polrohr 16 angeordnet, welches ein offenes Ende 17 und ein geschlossenes Ende 18 aufweist, in dem die Antriebswelle 14 in einer Lagerstelle 19 gelagert ist. Zum Verschluß des offenen Endes 17 des Polrohres 16 sowie zur Fixierung des Polrohres 16 an der Kontaktplatte 10 weist diese einen Absatz 20 auf, auf den das Polrohr 16 beim Zusammenbau geschoben wird. Dieser Absatz 20 kann sowohl als geschlossener Ring oder nur als Ringsegmente ausgeführt werden. An den Innenwänden des Polrohres 16 befinden sich zwei entsprechend geformte, in den Zeichnungen nicht dargestellte Permanentmagnete, welche durch ein Federelement 21 in tangentialer Richtung gegen einen axial verlaufenden Vorsprung 22 gedrückt werden. Entsprechend zu diesem an der Innenseite des Polrohres 16 ausgebildeten Vorsprung 22 befindet sich an dieser Seite eine Abflachung 23, so daß der gesamte Motor sehr nahe an dem Klappenstutzen 2 angebracht werden kann. Aufgrund der Anordnung mit dem axial verlaufenden Federelement 21, welches die tangentialen Kräfte ausübt, sowie des Vorsprungs 22 erfolgt die Befestigung der nicht dargestellten Magneten ohne zusätzlichen Klebstoff. Das Polrohr 16 erfüllt gleichzeitig die Funktion eines Motorgehäuses, wobei eine ausgesprochen gute Wärmeabfuhr gegeben ist. Die Lagerung der Antriebswelle 14 am offenen Ende 17 des Polrohres 16 erfolgt über ein Lagerelement 24, welches in einer entsprechenden Bohrung der Kontaktplatte 10 angeordnet ist. Das geschlossene Ende 18 des Polrohres 16 ist in einer Ausnehmung 25 eines Lagerbocks 26 angeordnet. Im dargestellten Ausführungsbeispiel wird das Polrohr 16 über nicht dargestellte Schrauben, welche durch Bohrungen 27 im Lagerbock 26 gesteckt werden und mit dem Polrohrende 18 verschraubt werden, drehfest an diesem Lagerbock 26 befestigt.

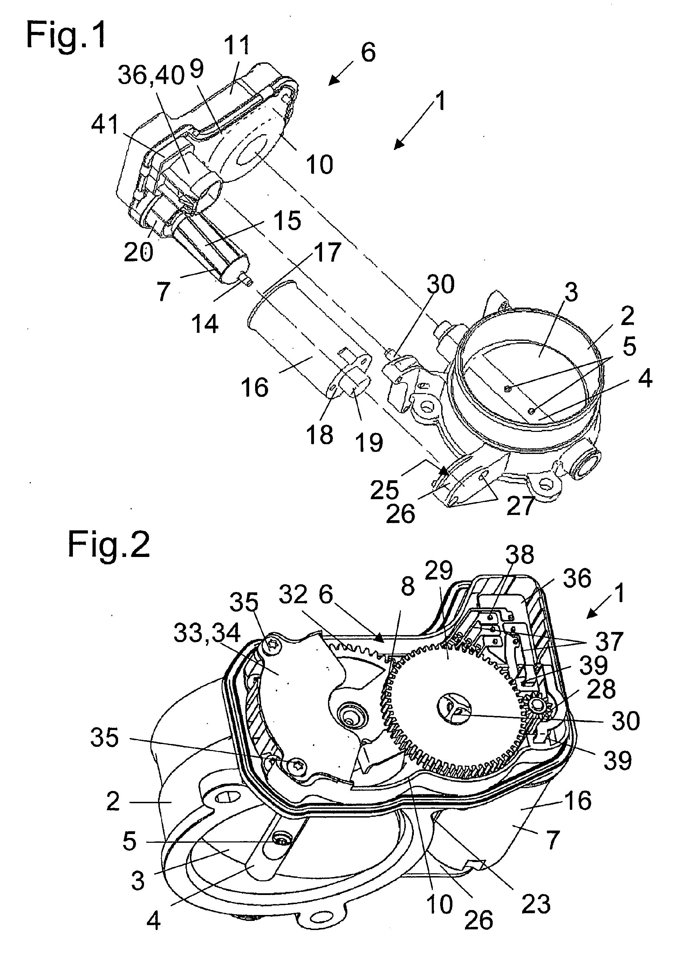

Das Untersetzungsgetriebe 8 besteht aus einem Antriebszahnrad 28, welches auf der Antriebswelle 14 des Elektromotors 7 zumindest drehfest angeordnet ist sowie einem mit diesem Antriebszahnrad 28 kämmenden Getriebemittelrad 29, welches als Doppelzahnrad ausgeführt ist. Dieses Doppelzahnrad ist auf einer Getriebemittelradachse 30 angeordnet, welche wie in Figur 1 gut zu erkennen ist, fest am Drosselklappenstutzen angeordnet ist und durch eine Bohrung 31 in das Gehäuse 9 eingeführt wird. Das kleinere Rad des Doppelzahnrades 29 kämmt mit einem Abtriebszahnrad 32, welches als Zahnradsegment ausgeführt ist, und auf der Klappenwelle 4 zumindest drehfest angeordnet ist. Dieses Abtriebszahnrad 32 ist in bekannter Weise mit Schleifern 33 eines Potentiometers verbunden, welche mit entsprechenden nicht dargestellten Schleiferbahnen korrespondieren. Diese Schleiferbahnen sind auf eine Platine 34 des Potentiometers gedruckt, welche über Schrauben 35 mit der Kontaktplatte 10 verbunden ist.

Die Kontaktierung zwischen den Schleiferbahnen der Platine 34 und einem Stecker 36 sowie zwischen den Bürstenfedern 13 des Elektromotors 7 und dem Stecker 36 erfolgt über gestanzte Leiterbahnen 37, welche als Stammkämme ausgeführt in das Gehäuse eingelegt und dort befestigt werden. Während im gezeigten Ausführungsbeispiel die Kontaktierung zwischen Pins 38 des Steckers 36 und den Leiterbahnen 37 über eine Pressverbindung erfolgt, wird die Verbindung zwischen den Leiterbahnen 37 und den Schleiferbahnen beziehungsweise den Bürstenfedern 13 kraftschlüssig hergestellt, in dem die jeweiligen Enden der Leiterbahnen 37 federnd gegen die entsprechenden Kontaktflächen der Platine 34 beziehungsweise Bürstenfedern 13 anliegen.

Die Lage der Bürstenfedern 13 in der Kontaktplatte 10 ist in Figur 4 deutlich zu erkennen. An der Kontaktplatte 10 sind axial verlaufende Aufnahmetaschen 39 vorgesehen, durch die von der einen Seite die Bürstenfedern 13 und von der anderen Seite die entsprechenden Enden der Leiterbahnen 37 eingeschoben werden. Dazu können die Bürstenfedern 13 beispielsweise an ihrem in der Kontaktplatte 10 angeordneten Ende ein kleines Loch aufweisen, welches in einen entsprechenden kleinen Vorsprung in jeder Aufnahmetasche 39 einrastet, so daß die Enden der Leiterbahnen 37 die Bürstenfedern 13 mit deren Loch aufgrund ihrer Federwirkung kraftschlüssig in diesen Vorsprung drücken. Anschließend wird der Rotor 15 auf die Kontaktplatte 10 geschoben, wobei die beiden Bürsten 13 leicht auseinander gedrückt werden, wodurch die Verbindung zum sich drehenden Kollektor 12 kraftschlüssig hergestellt wird.

Der Stecker 36 ist in der Regel derartig ausgeführt, daß das innere Ende mit den Pins 38 nach außen ragt und von einem äußeren Steckerteil 40 umgeben ist, welches auf einen entsprechenden Anschlußflansch 41, der an der Kontaktplatte 10 ausgebildet ist, aufgesteckt wird und mit diesem auf verschiedene Weise beispielsweise durch eine Clipsverbindung verbunden werden kann.

Die beschriebene Stellvorrichtung zeichnet sich durch eine hohe Flexibilität bezüglich ihres Anschlusses an verschiedene Drosselklappenstutzen aus, wobei der Bauraum minimiert ist und eine sehr gute Kühlung aufgrund des guten Wärmeübergangs des Motors gewährleistet ist. Alle verwendeten Bauteile und Ausführungen sind insbesondere bezüglich des Montageaufwands sowie der Herstellkosten minimiert. Zudem wird eine deutliche Gewichtsreduzierung durch die Ausführung des Klappenstutzens aus Leichtmetall oder Kunststoff sowie durch die Herstellung der Kontaktplatte aus einem nicht leitenden Kunststoff aber auch durch das nicht zusätzlich vorhandene Gehäuse des Elektromotors und des Getriebeschildes erreicht.

Von diesem Ausführungsbeispiel abweichende Ausführungsformen insbesondere bezüglich der Kontaktierung zwischen Stecker und einem Sensor, der nicht unbedingt als Potentiometer ausgeführt sein muß, oder aber bezüglich der die Drehfestigkeit des Polrohres festlegenden konstruktiven Maßnahmen sind in den Ansprüchen enthalten.

## Patentansprüche

1. Klappenstellvorrichtung (1), insbesondere eine Drosselklappenstellvorrichtung für Verbrennungskraftmaschinen, mit einem Klappenstutzen (2), welcher eine Klappe (3), die mit einer Klappenwelle (4) verbunden ist, aufweist, über die die Klappe (3) drehbar zumindest einseitig im Klappenstutzen (2) gelagert ist, und mit einer Antriebseinheit (6), welche zumindest einen Etektromotor (7) und ein Untersetzungsgetriebe (8) zum Antrieb der Klappe (3) und einen Sensor (33,34) zur Lagerückmeldung der Klappenstellung aufweist, wobei zumindest das Getriebe (8) in einem Gehäuse (9) angeordnet ist, welches eine Kontaktplatte (10), die an dem Klappenstutzen (2) befestigt ist und einen das Gehäuse (9) verschließenden Deckel (11) aufweist, **dadurch gekennzeichnet, daß** der Elektromotor (7) außerhalb des Gehäuses (9) und des Klappenstutzens (2) angeordnet ist, wobei der Elektromotor (7) einseitig offen ausgeführt ist und über ein Polrohr (16), dessen erstes, an einer Antriebswelle (14) des Elektromotors (7) gelegenes Ende (17), auf einen im wesentlichen ringförmigen axial verlaufenden Absatz (20) der Kontaktplatte (10) gesteckt ist, wodurch sein offenes Ende (17) verschließbar ist und dessen zweites, geschlossenes Ende (18) in einem Lagerbock (26) des Klappenstutzens (2) angeordnet ist, wobei die Antriebswelle (14) des Elektromotors (7) auf der einen Seite in der Kontaktplatte (10) und auf der anderen Seite in einer Lagerstelle (19) am geschlossenen Ende (18) des Polrohres (16) gelagert ist und wobei das Polrohr (16) gleichzeitig als Gehäuse des Elektromotors (7) dient.

2. Klappenstellvorrichtung nach Anspruch 1, **dadurch gekennzeichnet, daß** der im wesentlichen ringförmige axial verlaufende Absatz (20) der Kontaktplatte (10) segmentförmig ausgebildet ist.

3. Klappenstellvorrichtung nach Anspruch 1 oder 2, **dadurch gekennzeichnet, daß** die Befestigung der Magnete im Polrohr (16) durch ein axial angeordnetes Federelement (21), welches die Magnete in tangentialer Richtung gegen zumindest einen Vorsprung (22) an der inneren Wand des Polrohres (16) drückt, erfolgt und das Polrohr (16) zumindest an der zum Klappenstutzen (2) gewandten Seite eine in axialer Richtung verlaufende Abflachung (23) aufweist.

4. Klappenstellvorrichtung nach einem der vorhergehenden Ansprüche, **dadurch gekennzeichnet, daß** mit einem Kollektor (12) in Verbindung stehende Bürstenfedern (13) des Elektromotors (7) zur Kontaktierung kraft- oder formschlüssig an der Kontaktplatte (10) der Stellvorrichtung (1) befestigt sind.

5. Klappenstellvorrichtung nach einem der vorhergehenden Ansprüche, **dadurch gekennzeichnet, daß** die Kontaktplatte (10) einen Anschlußflansch (41) zur Befestigung eines Steckers (36) zur elektrischen Kontaktierung aufweist, wobei die Anschlußpins (38) des jeweiligen Steckers (36) eingespritzt oder gerastet sind.

6. Klappenstellvorrichtung nach einem der vorhergehenden Ansprüche, **dadurch gekennzeichnet, daß** das Getriebe (8) ein Antriebszahnrad (28), welches zumindest drehfest auf der Antriebswelle (14) des Elektromotors (7) angeordnet ist, ein Getriebemittelrad (29) in Form eines Doppelzahnrades, welches auf einer Getriebemittelradachse (30) gelagert ist und ein Abtriebszahnrad (32) aufweist, welches zumindest drehfest auf der Klappenwelle (4) angeordnet ist, wobei die Getriebemittelradachse (30) am Klappenstutzen (2) befestigt ist und durch eine Bohrung (31) in der Kontaktplatte (10) in das Gehäuse (9) des Getriebes (8) reicht.

7. Klappenstellvorrichtung nach einem der vorhergehenden Ansprüche, **dadurch gekennzeichnet, daß** der Klappenstutzen (2) aus Leichtmetall oder Kunststoff hergestellt ist.

8. Klappenstellvorrichtung nach einem der vorhergehenden Ansprüche, **dadurch gekennzeichnet, daß** die Kontaktplatte (10) aus einem nicht leitenden Kunststoff hergestellt ist.

9. Klappenstellvorrichtung nach einem der vorhergehenden Ansprüche, **dadurch gekennzeichnet, daß** der Sensor als Potentiometer ausgeführt ist, der im Gehäuse (9) angeordnet ist und dessen Schleiferbahnen direkt auf die Kontaktplatte (10) oder eine Platine (34) gedruckt sind.

10. Klappenstellvorrichtung nach einem der vorhergehenden Ansprüche, **dadurch gekennzeichnet, daß** die elektrischen Leiterbahnen (37) im Gehäuse (9) angeordnet sind und auf die Kontaktplatte (10) gedruckt oder aufgespritzt oder eingespritzt sind.

11. Klappenstellvorrichtung nach einem der Ansprüche 1 bis 9, **dadurch gekennzeichnet, daß** die elektrischen Leiterbahnen (37) als Stanzteile ausgeführt sind, die im Gehäuse (9) des Getriebes (8) freiliegend angeordnet sind.

12. Klappenstellvorrichtung nach einem der vorhergehenden Ansprüche, **dadurch gekennzeichnet, daß** der Elektromotor (7) über Schrauben (27) oder am geschlossenen Ende (18) des Polrohres (16) ausgebildete Vorsprünge, welche in entsprechender Ausnehmung des Lagerbocks (26) greifen, drehfest am Lagerbock (26) befestigt ist.

13. Klappenstellvorrichtung nach einem der Ansprüche 1 bis 11, **dadurch gekennzeichnet, daß** die Drehfestigkeit des Polrohres (16) über den axial verlaufenden Absatz (20) der Kontaktplatte (10) hergestellt ist, indem die Abflachung (23) des Polrohres (16) in eine korrespondierende Abflachung des ansonsten ringförmigen Absatzes (20) greift.

14. Klappenstellvorrichtung nach einem der Ansprüche 1 bis 11, **dadurch gekennzeichnet, daß** die Drehfestigkeit des Polrohres (16) durch eine Schraubverbindung des Polrohres (16) an der Kontaktplatte (10) hergestellt ist.

## Claims

1. Valve positioning device (1), in particular a throttle valve positioning device for internal combustion engines, with a valve connecting piece (2) comprising a valve (3) which is connected to a valve shaft (4) via which the valve (3) is rotatably mounted at least on one side in the valve connecting piece (2), and with a drive unit (6) which comprises at least one electric motor (7) and one reduction gear (8) for driving the valve (3) and a sensor (33, 34) for feeding back the valve position, wherein at least the gear (8) is disposed in a case (9) comprising a contact plate (10), which is fastened to the valve connecting piece (2), and a cover (11) closing the case (9), **characterised in that** the electric motor (7) is disposed outside of the case (9) and the valve connecting piece (2), wherein the electric motor (7) is open on one side and via a pole tube (16), whose first end (17), located at a drive shaft (14) of the electric motor (7), is placed on a substantially annular axially extending shoulder (20) of the contact plate (10), whereby its open end (17) can be closed and its second, closed end (18) is disposed in a bearing block (26) of the valve connecting piece (2), wherein the drive shaft (14) of the electric motor (7) is mounted on one side in the contact plate (10) and on the other side in a bearing point (19) at the closed end (18) of the pole tube (16), and wherein the pole tube (16) at the same time serves as the casing of the electric motor (7).

2. Valve positioning device according to Claim 1, **characterised in that** the substantially annular axially extending shoulder (20) of the contact plate (10) is formed in a segmental manner.

3. Valve positioning device according to Claim 1 or 2, **characterised in that** the magnets are fastened in the pole tube (16) by an axially disposed spring element (21) which pushes the magnets in the tangential direction against at least one projection (22) at the inner wall of the pole tube (16), and the pole tube (16) comprises a flattened portion (23), which extends in the axial direction, at least on the side which faces the valve connecting piece (2).

4. Valve positioning device according to any one of the preceding Claims, **characterised in that** brush springs (13), which are connected to a commutator (12), of the electric motor (7) are non-positively or positively fastened to the contact plate (10) of the positioning device (1) for contacting.

5. Valve positioning device according to any one of the preceding Claims, **characterised in that** the contact plate (10) comprises a connection flange (41) for fastening a plug (36) for electrical contacting, wherein the connection pins (38) of the respective plug (36) are injected or locked.

6. Valve positioning device according to any one of the preceding Claims, **characterised in that** the gear (8) comprises a driving gear wheel (28), which is disposed at least in a torsionally rigid manner on the drive shaft (14) of the electric motor (7), and a central gear wheel (29) in the form of a double gear wheel which is mounted on a central gear wheel shaft (30) and comprises a driven gear wheel (32) which is disposed at least in a torsionally rigid manner on the valve shaft (4), wherein the central gear wheel shaft (30) is fastened to the valve connecting piece (2) and reaches through a bore (31) in the contact plate (10) into the case (9) of the gear (8).

7. Valve positioning device according to any one of the preceding Claims, **characterised in that** the valve connecting piece (2) is made of light metal or a plastics material.

8. Valve positioning device according to any one of the preceding Claims, **characterised in that** the contact plate (10) is made of a non-conductive plastics material.

9. Valve positioning device according to any one of the preceding Claims, **characterised in that** the sensor is constructed as a potentiometer which is disposed in the case (9) and the wiper tracks of which are printed directly onto the contact plate (10) or a printed circuit board (34) .

10. Valve positioning device according to any one of the preceding Claims, **characterised in that** the electrical conductor tracks (37) are disposed in the case (9) and are printed or sprayed or injected onto the contact plate (10).

11. Valve positioning device according to any one of Claims 1 to 9, **characterised in that** the electrical conductor tracks (37) are constructed as stampings which are disposed in an exposed manner in the case (9) of the gear (8).

12. Valve positioning device according to any one of the preceding Claims, **characterised in that** the electric motor (7) is fastened in a torsionally rigid manner to the bearing block (26) via screws (27) or projections which are formed at the closed end (18) of the pole tube (16) and which engage in a corresponding recess of the bearing block (26).

13. Valve positioning device according to any one of Claims 1 to 11, **characterised in that** the resistance to torsion of the pole tube (16) is produced via the axially extending shoulder (20) of the contact plate (10) as a result of the flattened portion (23) of the pole tube (16) engaging with a corresponding flattened portion of the otherwise annular shoulder (20).

14. Valve positioning device according to any one of Claims 1 to 11, **characterised in that** the resistance to torsion of the pole tube (16) is produced by a screw connection of the pole tube (16) at the contact plate (10).

## Revendications

1. Dispositif de positionnement de clapet (1), en particulier un dispositif de positionnement de clapet papillon pour des moteurs à combustion interne, comportant une virole de clapet (2), qui présente un clapet (3) qui est relié à un arbre de clapet (4), par l'intermédiaire duquel le clapet (3) est supporté avec possibilité de rotation au moins d'un côté dans la virole de clapet (2), et comportant une unité d'entraînement (6), qui présente au moins un moteur électrique (7) et un mécanisme réducteur (8) pour l'entraînement du clapet (3), et un capteur (33, 34) pour le signal de retour de la position de clapet, au moins le mécanisme réducteur (8) étant disposé dans un boîtier (9) qui présente une plaque de contact (10) qui est fixée à la virole de clapet (2) et un couvercle (11) fermant le boîtier (9), **caractérisé en ce que** le moteur électrique (7) est disposé à l'extérieur du boîtier (9) et de la virole de clapet (2), le moteur électrique (7) étant réalisé ouvert d'un côté, et par l'intermédiaire d'un tube polarisé (16), dont la première extrémité (17), posée sur un arbre d' entraînement (1.4) du moteur électrique (7), est placée sur un épaulement (20) essentiellement annulaire s'étendant axialement de la plaque de contact (10), ce par quoi son extrémité ouverte (17) peut être fermée, et dont la deuxième extrémité (18), fermée, est disposée dans un support de palier (26) de la virole de clapet (2), l'arbre d'entraînement (14) du moteur électrique (7) étant supporté d'un côté dans la plaque de contact (10) et de l'autre côté dans un endroit de support (19) à l'extrémité fermée (18) du tube polarisé (16), et le tube polarisé (16) servant simultanément de boîtier au moteur électrique (7).

2. Dispositif de positionnement de clapet selon la revendication 1, **caractérisé en ce que** l'épaulement (20) essentiellement annulaire s'étendant axialement de la plaque de contact (10) est réalisé en forme de segment.

3. Dispositif de positionnement de clapet selon la revendication 1 ou 2, **caractérisé en ce que** la fixation des aimants dans le tube polarisé (16) s'effectue par l'intermédiaire d'un élément de ressort (21) disposé axialement, qui presse les aimants dans la direction tangentielle contre au moins une saillie (22) sur la paroi intérieure du tube polarisé (16), et le tube polarisé (16) présente au moins sur le côté tourné vers la virole de clapet (2) un méplat (23) s'étendant dans la direction axiale.

4. Dispositif de positionnement de clapet selon l'une des revendications précédentes, **caractérisé en ce que** pour la mise en contact, des ressorts de balai (13) du moteur électrique (7) en liaison avec un collecteur (12) sont fixés par coopération de forces ou de formes à la plaque de contact (10) du dispositif de positionnement (1).

5. Dispositif de positionnement de clapet selon l'une des revendications précédentes, **caractérisé en ce que** la plaque de contact (10) présente une bride de raccordement (41) pour fixer un connecteur (36) pour la mise en contact électrique, les broches de connexion (38) du connecteur (36) considéré étant injectées ou encliquetées.

6. Dispositif de positionnement de clapet selon l'une des revendications précédentes, **caractérisé en ce que** le mécanisme (8) présente une roue dentée d'entraînement (28), qui est disposée au moins sans possibilité de rotation sur l'arbre d'entraînement (14) du moteur électrique (7), une roue de mécanisme (29) sous la forme d'une roue dentée double, qui est supportée sur un axe de roue centrale de mécanisme (30), et une roue dentée entraînée (32), qui est disposée au moins sans possibilité de rotation sur l'arbre de clapet (4), l'axe de roue centrale de mécanisme (30) étant fixé sur la virole de clapet (2) et pénétrant dans le boîtier de mécanisme (8) par un perçage (31) dans la plaque de contact (10).

7. Dispositif de positionnement de clapet selon l'une des revendications précédentes, **caractérisé en ce que** la virole de clapet (2) est réalisée en métal léger ou en matière plastique.

8. Dispositif de positionnement de clapet selon l'une des revendications précédentes, **caractérisé en ce que** la plaque de contact (10) est réalisée dans une matière plastique non conductrice.

9. Dispositif de positionnement de clapet l'une des revendications précédentes, **caractérisé en ce que** le capteur est réalisé sous forme de potentiomètre, qui est disposé dans le boîtier (9) et dont les pistes de frotteurs sont imprimées directement sur la plaque de contact (10) ou une platine (34).

10. Dispositif de positionnement de clapet l'une des revendications précédentes, **caractérisé en ce que** les pistes conductrices (37) électriques sont disposées dans le boîtier (9) et sont imprimées, ou projetées sur la plaque de contact (10) ou injectées sur celle-ci.

11. Dispositif de positionnement de clapet selon l'une des revendications 1 à 9, **caractérisé en ce que** les pistes conductrices (37) électriques sont réalisées sous forme de pièces estampées qui sont disposées librement dans le boîtier (9) du réducteur (8).

12. Dispositif de positionnement de clapet l'une des revendications précédentes, **caractérisé en ce que** le moteur électrique (7) est fixé sans possibilité de rotation sur le support de palier (26) par l'intermédiaire de vis (27) ou de saillies réalisées à l'extrémité fermée (18) du tube polarisé (16) qui viennent en prise dans des évidements correspondants du support de palier (26).

13. Dispositif de positionnement de clapet selon l'une des revendication 1 à 11, **caractérisé en ce que** l'impossibilité de rotation du tube polarisé (16) est réalisée par l'intermédiaire de l'épaulement (20) s'étendant axialement de la plaque de contact (10), dans la mesure où le méplat (23) du tube polarisé (16) vient en prise dans un méplat correspondant de l'épaulement (20) par ailleurs de forme annulaire.

14. Dispositif de positionnement de clapet selon l'une des revendications 1 à 11, **caractérisé en ce que** l'impossibilité de rotation du tube polarisé (16) est réalisée par l'intermédiaire d'un assemblage vissé du tube polarisé (16) sur la plaque de contact (10).
